# EUROPEAN PATENT APPLICATION

(11) **EP 3 392 617 A1**
(43) Date of publication of application: **24.10.2018**
(21) Application number: 16883113.9
(22) Date of filing: 27.07.2016
(51) Int. Cl.: G01C 21/26

(54) **NAVIGATION DEVICE, AND NAVIGATION METHOD**

(30) Priority: 06.01.2016 CN 201610005790
(71) Applicant: Huawei Technologies Co., Ltd., Longgang District Shenzhen, Guangdong 518129 (CN)
(72) Inventor: MO, Haoju, Shenzhen, Guangdong 518129 (CN); LIU, Jilin, Shenzhen, Guangdong 518129 (CN); SUN, Yan, Shenzhen, Guangdong 518129 (CN)
(74) Representative: Maiwald Patent- und Rechtsanwaltsgesellschaft mbH
(86) International application number: PCT/CN2016/091816
(87) International publication number: WO 2017/117979

(57) **Abstract**

A navigation apparatus and a navigation method are disclosed. The navigation apparatus (100) includes a main processor (110), a coprocessor (120), a locator (130), and a first memory (140). The main processor (110) is configured to: generate navigation data, store the navigation data in the first memory (140), and enter a sleep state after storing the navigation data. The locator (130) is configured to determine a current location of the navigation apparatus (100). The coprocessor (120) is configured to: obtain the navigation data stored in the first memory (140), and perform navigation according to the navigation data and the current location of the navigation apparatus (100) determined by the locator (130). The performing navigation includes at least one of the following: triggering the main processor (110) to update the navigation data, triggering voice broadcast, or determining data that needs to be displayed in the navigation data. Power of the main processor (110) is higher than power of the coprocessor (120). Therefore, sleeping of the main processor (110) while the coprocessor (120) performs navigation can reduce power consumption of the navigation apparatus (100) and improve a battery life of the navigation apparatus (100).

## Description

This application claims priority to Chinese Patent Application No. 201610005790.1, filed with the Chinese Patent Office on January 6, 2016 and entitled "NAVIGATION APPARATUS AND NAVIGATION METHOD", which is comprised herein by reference in its entirety.

### TECHNICAL FIELD

Embodiments of the present invention relate to the communications field, and in particular, to a navigation apparatus and a navigation method in the communications field.

### BACKGROUND

Navigation applications on a terminal become widely popular. In terminal navigation, a user needs to input an instruction to implement functions such as path planning and geofencing, and a prompt, such as voice broadcast or path replanning, is triggered by means of event determining and the terminal navigation. Programs for event determining, prompt triggering, and the like are run on an application processor. Consequently, power consumption of the application processor is relatively high, and standby time of a terminal device is affected.

In an in-vehicle case, some users need to perform long-time positioning on the terminal. To compensate for battery consumption, the terminal device is charged when the positioning is being performed. Charging the terminal device causes much inconvenience to an overall navigation process. For example, when the terminal device is being charged by using a cable, it is inconvenient to carry and operate the terminal device.

In a conventional technology, in a conventional navigation process of an user, a terminal device can be in a screen-off state in the navigation, and the user is prompted by means of voice. This solution can reduce power consumption of a screen. However, a program for determining and triggering a voice prompt is still run on an application processor, and the application processor still consumes a particular amount of current for determining an event, for example, consumes current of at least 100 mA (milliampere). As a result, power consumption of a navigation application on the terminal device is high.

### SUMMARY

Embodiments of the present invention provide a navigation apparatus and a navigation method, to resolve a problem of relatively high power consumption of a processor in a navigation process.

According to a first aspect, a navigation apparatus is provided, where the navigation apparatus includes a main processor, a coprocessor, a locator, and a first memory; the main processor is configured to: generate navigation data, store the navigation data in the first memory, and enter a sleep state after storing the navigation data; the locator is configured to determine a current location of the navigation apparatus; and the coprocessor is configured to: obtain the navigation data stored in the first memory, and perform navigation according to the navigation data and the current location of the navigation apparatus determined by the locator, where the performing navigation includes at least one of triggering the main processor to update the navigation data, triggering voice broadcast, or determining data that needs to be displayed in the navigation data, and power of the main processor is higher than power of the coprocessor.

In this way, the main processor may generate the navigation data, store the generated navigation data in the first memory, and then enter the sleep state. Power consumption of the main processor in the sleep state is relatively low. The coprocessor may obtain the navigation data from the first memory, and perform navigation according to the navigation data and the current location of the navigation apparatus. Power consumption of the coprocessor is lower than the power consumption of the main processor. Therefore, sleeping of the main processor while the coprocessor performs navigation can reduce power consumption of the navigation apparatus and improve a battery life of the navigation apparatus.

In a first possible implementation of the first aspect, the coprocessor is specifically configured to determine, according to the navigation data and the current location of the navigation apparatus determined by the locator, that the main processor needs to be woken up.

Optionally, the coprocessor may determine, according to the navigation data and the current location of the navigation apparatus determined by the locator, whether the main processor needs to be woken up.

With reference to the foregoing possible implementation of the first aspect, in a second possible implementation of the first aspect, the navigation data includes location data of multiple first flag points, where the multiple first flag points are distributed in a current planning path at intervals; and the coprocessor is specifically configured to: when it is determined that a distance between the current location of the navigation apparatus and each of the multiple first flag points is greater than a first threshold or it is determined that a distance between the current location of the navigation apparatus and a first flag point with a shortest distance to the current location is greater than the first threshold, determine that the main processor needs to be woken up to update the navigation data.

In this case, the coprocessor may be specifically configured to determine, according to the current location of the navigation apparatus and the location data of the multiple first flag points, whether to wake up the main processor.

Optionally, the multiple first flag points may be used to mark the current planning path, and the multiple first flag points may be determined by the main processor, for example, being determined in a process of generating the navigation data. Each flag point in the multiple first flag points is corresponding to a particular coverage radius. If the current location of the navigation apparatus falls within a coverage radius of a first flag point in the multiple first flag points, it indicates that the navigation apparatus does not deviate from the current planning path. Optionally, a distance between any two adjacent flag points in the multiple first flag points may be less than or equal to a sum of coverage radii that are corresponding to the two adjacent flag points. For example, a distance between a first flag point and the second flag point is less than or equal to a sum of a coverage radius of the first flag point and a coverage radius of the second flag point.

Optionally, the coprocessor may be further specifically configured to: when a distance between the current location of the navigation apparatus and each of the multiple first flag points is greater than a coverage radius of each first flag point, determine that the main processor needs to be woken up to update the navigation data.

With reference to any one of the foregoing possible implementations of the first aspect, in a third possible implementation of the first aspect, the coprocessor is further specifically configured to: after determining that the main processor needs to be woken up to update the navigation data, send a first trigger message to the main processor, where the first trigger message is used to request the main processor to replan a travel path; and the main processor is further configured to: receive the first trigger message sent by the coprocessor; and switch from the sleep state to an operation state and generate updated navigation data according to the first trigger message.

With reference to any one of the foregoing possible implementations of the first aspect, in a fourth possible implementation of the first aspect, the navigation data includes location data of a second flag point for triggering voice broadcast; and the coprocessor is specifically configured to: when it is determined that a distance between the current location of the navigation apparatus and the second flag point is less than a second threshold, determine that the main processor needs to be woken up to trigger voice broadcast.

Optionally, there may be one or more of second flag points, and the second flag point may be used for voice broadcast.

With reference to any one of the foregoing possible implementations of the first aspect, in a fifth possible implementation of the first aspect, the coprocessor is further specifically configured to: after determining that the main processor needs to be woken up to trigger voice broadcast, send a second trigger message to the main processor, where the second trigger message is used to instruct the main processor to trigger voice broadcast, and the second trigger message carries information about the second flag point; and the main processor is further configured to: receive the second trigger message sent by the coprocessor; and send voice broadcast information used to execute voice broadcast to a player according to the second trigger message, so that the player performs voice broadcast according to the voice broadcast information.

With reference to any one of the foregoing possible implementations of the first aspect, in a sixth possible implementation of the first aspect, the navigation data includes location data of a second flag point for triggering voice broadcast; and the coprocessor is further specifically configured to: when it is determined that a distance between the current location of the navigation apparatus and the second flag point is less than a third threshold, send voice broadcast information used to execute voice broadcast to a player, so that the player performs voice broadcast according to the voice broadcast information.

Optionally, the second flag point includes at least one of a path turn point, a service area, or a landmark building in the current planning path.

With reference to any one of the foregoing possible implementations of the first aspect, in a seventh possible implementation of the first aspect, the navigation apparatus further includes a second memory and a direct memory access device, where the direct memory access device is configured to: obtain the navigation data from the first memory, and store the navigation data in the second memory; and the coprocessor is further specifically configured to obtain the navigation data from the second memory.

With reference to any one of the foregoing possible implementations of the first aspect, in an eighth possible implementation of the first aspect, the navigation apparatus further includes a display; the coprocessor is further specifically configured to: determine the data that needs to be displayed in the navigation data, and send the data that needs to be displayed to the display; and the display is configured to: receive the data that is sent by the coprocessor and that needs to be displayed, and generate and display a navigation image according to the data that needs to be displayed.

According to a second aspect, a terminal device is provided, where the terminal device includes the navigation apparatus in any one o the first aspect or any possible implementation of the first aspect.

In a first possible implementation of the second aspect, the terminal device is a mobile phone or a tablet computer.

According to a third aspect, a navigation method is provided, where the navigation method includes: generating, by a main processor, navigation data, storing the navigation data in a first memory, and entering a sleep state after storing the navigation data; determining, by a locator, a current location of the navigation apparatus; and obtaining, by a coprocessor, the navigation data stored in the first memory, and performing navigation according to the navigation data and the current location of the navigation apparatus determined by the locator, where the performing navigation includes at least one of triggering the main processor to update the navigation data, triggering voice broadcast, or determining data that needs to be displayed in the navigation data, and power of the main processor is higher than power of the coprocessor.

In a first possible implementation of the third aspect, the performing, by a coprocessor, navigation according to the navigation data and the current location of the navigation apparatus determined by the locator includes: determining, by the coprocessor according to the navigation data and the current location of the navigation apparatus determined by the locator, that the main processor needs to be woken up.

With reference to the foregoing possible implementation of the third aspect, in a second possible implementation of the third aspect, the determining, by the coprocessor according to the navigation data and the current location of the navigation apparatus determined by the locator, that the main processor needs to be woken up includes: when it is determined that a distance between the current location of the navigation apparatus and each of multiple first flag points is greater than a first threshold or it is determined that a distance between the current location of the navigation apparatus and a first flag point with a shortest distance to the current location is greater than the first threshold, determining that the main processor needs to be woken up to update the navigation data; and the navigation data includes location data of the multiple first flag points, and the multiple first flag points are distributed in a current planning path at intervals.

With reference to any one of the foregoing possible implementations of the third aspect, in a third possible implementation of the third aspect, the performing, by a coprocessor, navigation according to the navigation data and the current location of the navigation apparatus determined by the locator further includes: after determining that the main processor needs to be woken up to update the navigation data, sending, by the coprocessor, a first trigger message to the main processor, where the first trigger message is used to request the main processor to replan a travel path; receiving, by the main processor, the first trigger message sent by the coprocessor; and switching, by the main processor, from the sleep state to an operation state and generating updated navigation data according to the first trigger message.

With reference to any one of the foregoing possible implementations of the third aspect, in a fourth possible implementation of the third aspect, the determining, by the coprocessor according to the navigation data and the current location of the navigation apparatus determined by the locator, that the main processor needs to be woken up includes: when it is determined that a distance between the current location of the navigation apparatus and a second flag point is less than a second threshold, determining, by the coprocessor, that the main processor needs to be woken up to trigger voice broadcast; and the navigation data includes location data of the second flag point for triggering voice broadcast.

With reference to any one of the foregoing possible implementations of the third aspect, in a fifth possible implementation of the third aspect, the performing, by a coprocessor, navigation according to the navigation data and the current location of the navigation apparatus determined by the locator further includes: after determining that the main processor needs to be woken up to trigger voice broadcast, sending, by the coprocessor, a second trigger message to the main processor, where the second trigger message is used to instruct the main processor to trigger voice broadcast, and the second trigger message carries information about the second flag point; receiving, by the main processor, the second trigger message sent by the coprocessor; and sending, by the main processor, voice broadcast information used to execute voice broadcast to a player according to the second trigger message, so that the player performs voice broadcast according to the voice broadcast information.

With reference to any one of the foregoing possible implementations of the third aspect, in a sixth possible implementation of the third aspect, the performing, by a coprocessor, navigation according to the navigation data and the current location of the navigation apparatus determined by the locator further includes: when it is determined that a distance between the current location of the navigation apparatus and a second flag point is less than a third threshold, sending, by the coprocessor to a player, voice broadcast information used to execute voice broadcast, so that the player performs voice broadcast according to the voice broadcast information; and the navigation data includes location data of the second flag point for triggering voice broadcast.

Optionally, the second flag point includes at least one of a path turn point, a service area, or a landmark building in the current planning path.

Therefore, according to the navigation method provided in this embodiment of the present invention, a fence is used to determine, according to the navigation data and the current location of the navigation apparatus, whether path replanning or voice broadcast needs to be performed. After the main processor generates the navigation data, the main processor enters the sleep state, and the coprocessor performs navigation. Power consumption of the main processor is higher than power consumption of the coprocessor. When the main processor needs to be involved, the coprocessor wakes up the main processor. When the main processor does not need to be involved, the main processor enters the sleep state. Therefore, power consumption of the navigation apparatus can be reduced, and a battery life of the navigation apparatus can be improved.

With reference to any one of the foregoing possible implementations of the third aspect, in a seventh possible implementation of the third aspect, the obtaining, by a coprocessor, the navigation data stored in the first memory includes: obtaining, by a direct memory access device, the navigation data from the first memory, and storing the navigation data in the second memory; and obtaining, by the coprocessor, the navigation data from the second memory.

With reference to any one of the foregoing possible implementations of the third aspect, in an eighth possible implementation of the third aspect, the performing, by a coprocessor, navigation according to the navigation data and the current location of the navigation apparatus determined by the locator further includes: determining, by the coprocessor in the navigation data, the data that needs to be displayed, and sending the data that needs to be displayed to a display; and receiving, by the display, the data that is sent by the coprocessor and that needs to be displayed, and generating the navigation image according to the data that needs to be displayed.

The method in the third aspect may be performed by the navigation apparatus in the first aspect or any possible implementation of the first aspect.

According to a fourth aspect, a computer readable medium is provided, configured to store a computer program, where the computer program includes an instruction used to perform the method in the third aspect or any possible implementation of the third aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a navigation apparatus according to an embodiment of the present invention;
FIG. 2 is a schematic diagram of an application scenario example according to an embodiment of the present invention;
FIG. 3 is a schematic diagram of a navigation method according to an embodiment of the present invention; and
FIG. 4 is another schematic diagram of a navigation method according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

A terminal device may also be referred to as user equipment, mobile user equipment, or the like, and may communicate with one or more core networks by using a radio access network. The user equipment may be a terminal device such as a mobile phone (or referred to as a "cellular" phone) or a computer having a terminal device, for example, a portable, pocket-sized, handheld, computer built-in, or in-vehicle mobile apparatus, and exchange voice and/or data with a radio access network.

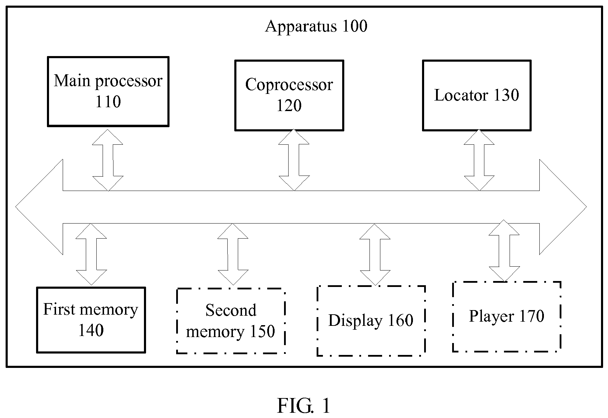

FIG. 1 shows a schematic diagram of a navigation apparatus 100 according to an embodiment of the present invention. The apparatus 100 includes a main processor 110, a coprocessor 120, a locator 130, and a first memory 140.

The main processor 110 is configured to: generate navigation data, store the navigation data in the first memory 140, and enter a sleep state after storing the navigation data.

The locator 130 is configured to determine a current location of the navigation apparatus 100.

The coprocessor 120 is configured to: obtain the navigation data stored in the first memory 140, and perform navigation according to the navigation data and the current location of the navigation apparatus 100 determined by the locator 130. The performing navigation includes at least one of triggering the main processor 110 to update the navigation data, triggering voice broadcast, or determining data that needs to be displayed in the navigation data. Power of the main processor 110 is higher than power of the coprocessor 120. That is, power consumption of the main processor 110 is higher than power consumption of the coprocessor 120.

Optionally, the main processor 110, the coprocessor 120, the locator 130, and the first memory 140 may be connected by using a bus, or connected by using another internal connection cable or component. A "connection" related to this embodiment and subsequent embodiments should be understood as an electronic connection and is not a direct connection. This connection may be implemented by using a third-party component indirectly.

Specifically, the main processor 110 may generate the navigation data. The navigation data is usually a travel path planned by the main processor 110 for a user. Generally, an optimal or shortest path is selected. Alternatively, multiple paths may be planned for selection by the user. The main processor 110 stores the generated navigation data in the first memory 140, and then enters the sleep state. Power consumption of the main processor 110 in the sleep state is relatively low. The sleep state is also referred to as a hibernation state, a standby state, or a low power-consumption state. The power consumption of the main processor 110 in the sleep state is lower than the power consumption of the main processor 110 in normal operation. The coprocessor 120 may obtain the navigation data from the first memory 140, and perform navigation according to the navigation data and the current location of the navigation apparatus 100 determined by the locator 130. The power consumption of the coprocessor 120 is lower than the power consumption of the main processor 110. Therefore, sleeping of the main processor 110 while the coprocessor 120 performs navigation can reduce power consumption of the navigation apparatus 100 and improve a battery life of the navigation apparatus 100.

The main processor 110 generally has relatively high power consumption and a relatively high processing capability, for example, a chip in cortex A series of ARM (Advanced RISC Machine, advanced reduced instruction set computing machines) company. The chip in the cortex A series runs driver software to perform a processing operation. The driver software may be stored in a memory, for example, the above-mentioned first memory 140. Alternatively, the driver software is more often stored in a memory other than the first memory 140. The memory storing the driver software may be a nonvolatile memory. The driver software may include application software. The application software is docked, by using an application programming interface, with an operating system running on the main processor 110. The operating system may be Android, Windows, iOS, or the like. This is not limited in this embodiment of the present invention. The coprocessor 120 may be a micro control unit (Microprogrammed Control Unit, "MCU" for short), a digital signal processor (Digital Signal Processing, "DSP" for short), or the like. The main processor 110 may be a CPU (Central Processing Uint, central processing unit), a DSP, or the like. This is not limited in this embodiment of the present invention.

It should be understood that the locator 130 may use positioning technologies based on satellite positioning, WiFi (Wireless Fidelity, Wireless Fidelity) positioning, base station based positioning, and the like, and use these positioning technologies to determine, for example, the current location of the navigation apparatus 100. This is not limited in this embodiment of the present invention. The satellite positioning includes but is not limited to a GPS (Global Positioning System, Global Positioning System) positioning technology, a BeiDou positioning technology, and the like.

In an optional embodiment, the coprocessor 120 is specifically configured to determine, according to the navigation data and the current location of the navigation apparatus 100 determined by the locator 130, that the main processor 110 needs to be woken up.

In this way, after the main processor 110 generates the navigation data, the main processor 110 enters the sleep state. The coprocessor 120 determines, according to the navigation data and the current location of the navigation apparatus 100, whether to wake up the main processor 110. The power consumption of the main processor 110 is higher than the power consumption of the coprocessor 120. When the main processor 110 does not need to be involved, the main processor 110 enters the sleep state. When the main processor 110 needs to be involved, the coprocessor 120 wakes up the main processor 110. After generating new navigation data, the main processor 110 enters the sleep state again. Therefore, the power consumption of the navigation apparatus 100 can be reduced, and the battery life of the navigation apparatus 100 can be improved.

In an optional embodiment, the navigation data includes location data of multiple first flag points. The multiple first flag points are distributed in a current planning path at intervals. The coprocessor 120 is specifically configured to: when a distance between the current location of the navigation apparatus 100 and each of the multiple first flag points is greater than a first threshold or it is determined that a distance between the current location of the navigation apparatus 100 and a first flag point with a shortest distance to the current location is greater than the first threshold, determine that the main processor 110 needs to be woken up to update the navigation data.

It should be understood that the multiple first flag points may be determined by the main processor 110 in a process of generating the navigation data. For example, when a user inputs a place of departure and a destination, the main processor 110 determines a travel path for the user according to input of the user, that is, path planning. Flag points may be defined at a particular interval in the travel path planned by the main processor 110. For example, flag points are defined at an interval of 50 m, or flag points are defined at different intervals, or points having a marking meaning in the planned path are defined as flag points. This is not limited in this embodiment of the present invention. The first threshold herein may be understood as a fencing radius corresponding to each of the multiple first flag points. Each fencing radius may be same or different. If an i^{th} first flag point is corresponding to a fencing radius a, and an (i+1)^{th} first flag point is corresponding to a fencing radius b, a distance between the i^{th} first flag point and the (i+1)^{th} first flag point is less than a+b. That is, a circle formed by using the i^{th} first flag point as a center and a as a radius intersects with or is tangent to a circle formed by using the (i+1)^{th} first flag point as a center and b as a radius.

In an optional embodiment, the coprocessor 120 is further specifically configured to: after determining that the main processor 110 needs to be woken up to update the navigation data, send a first trigger message to the main processor 110, where the first trigger message is used to request the main processor 110 to replan a travel path. The main processor 110 is further configured to: receive the first trigger message sent by the coprocessor 120; and switch from the sleep state to an operation state and generate updated navigation data according to the first trigger message.

Specifically, the first threshold has already been determined by the main processor 110 when generating the navigation data. The coprocessor 120 determines, according to a distance between the location data of the multiple first flag points and the current location of the navigation apparatus 100, whether the main processor 110 needs to be woken up. When the coprocessor 120 detects that distances between the current location of the navigation apparatus 100 and locations of the multiple first flag points are less than or equal to the preset first threshold, that is, the current location of the navigation apparatus 100 falls within fencing ranges using the multiple first flag points as centers and the first threshold as a radius, the coprocessor 120 considers that the navigation apparatus 100 does not deviate from the planned path and that the main processor 110 does not need to be woken up. When the coprocessor 120 detects that distances between the current location of the navigation apparatus 100 and locations of the multiple first flag points are greater than the preset first threshold, that is, the current location of the navigation apparatus 100 falls beyond fencing ranges using the multiple first flag points as centers and the first threshold as a radius, the coprocessor 120 considers that the navigation apparatus 100 deviates from the planned path, and determines that the main processor 110 needs to be woken up to update the navigation data. The coprocessor 120 sends the first trigger message to the main processor 110, to wake up the main processor 110 to replan a path for the navigation apparatus 100. Alternatively, the coprocessor 120 may determine the location of the navigation apparatus 100 according to a movement speed or acceleration of the navigation apparatus 100 and the first threshold (the fencing radius), and determine whether the navigation apparatus 100 falls within fences using the multiple first flag points as centers and the first threshold as a radius. This is not limited in this embodiment of the present invention.

It should be understood that the main processor 110 set a same threshold or different thresholds for the multiple first flag points in the process of generating the navigation data. For example, a same fencing radius may be set to, for example, 20 m, and a corresponding first threshold may be set to 20 m. Alternatively, different fencing radii may be set for different flag points. Alternatively, M first flag points may be corresponding to N fencing radii and corresponding to N first thresholds, where both M and N are positive integers, and M is greater than or equal to N. This is not limited in this embodiment of the present invention.

In an optional embodiment, the navigation data includes location data of a second flag point for triggering voice broadcast. The second flag point includes at least one of a path turn point, a service area, or a landmark building in the current planning path, and may be, for example, a turning, a U-turn, a main road entrance/exit, a bridge entrance/exit, a restaurant, or a gas station.

In an optional embodiment, the coprocessor 120 is further specifically configured to: when it is determined that a distance between the current location of the navigation apparatus 100 and the second flag point is less than a second threshold, determine that the main processor 110 needs to be woken up to trigger voice broadcast.

In an optional embodiment, as shown in FIG. 1, the navigation apparatus 100 may further include the player 170. The coprocessor 120 is further configured to: after determining that the main processor 110 needs to be woken up to trigger voice broadcast, send a second trigger message to the main processor 110. The second trigger message is used to instruct the main processor 110 to trigger voice broadcast, and the second trigger message may carry information about the second flag point. The main processor 110 is further configured to: receive the second trigger message sent by the coprocessor 120; and send, to the player 170 according to the second trigger message, voice broadcast information used to execute voice broadcast. It should be understood that the player 170 may be included in a terminal device, or the player 170 may be an independent voice playing device. This is not limited in this embodiment of the present invention.

Specifically, the second flag point is determined by the main processor 110 in a path planning process. There may be one or more second flag points. The coprocessor 120 determines, according to a distance between the location data of the second flag point and the current location of the navigation apparatus 100, whether voice broadcast needs to be triggered. When the coprocessor 120 detects that a distance between the current location of the navigation apparatus 100 and a location of the second flag point is less than or equal to the second threshold, that is, the current location of the navigation apparatus 100 falls within a fencing range using the flag point as a center and the second threshold as a radius, the coprocessor 120 considers that the navigation apparatus 100 is about to arrive at the flag point and that voice broadcast needs to be performed. The coprocessor 120 may generate voice broadcast information, and send the voice broadcast information to the player 170. The player 170 performs broadcast according to the voice information. Generating the voice broadcast information by the coprocessor 120 may be that the coprocessor 120 obtains, from the first memory 140, voice broadcast information related to the second flag point. This is not limited in this embodiment of the present invention. When the coprocessor 120 detects that a distance between the current location of the navigation apparatus 100 and a location of a flag point is greater than the second threshold, that is, the current location of the navigation apparatus 100 falls beyond a fencing range using the second flag point as a center and the second threshold as a radius, the coprocessor 120 considers that the navigation apparatus 100 is far away from the flag point and that voice broadcast does not need to be performed. For example, current consumption of the main processor 110 when entering the sleep state is approximately 6 mA, and current consumption of the coprocessor 120 when implementing navigation and voice broadcast is approximately 200 mA, while current consumption of the main processor 110 when implementing navigation and voice broadcast is approximately 600 mA. Therefore, a manner in which the main processor 110 sleeps while the coprocessor 120 implements navigation and voice broadcast can reduce current consumption of approximately 394 mA.

In an optional embodiment, the coprocessor 120 is further specifically configured to: when it is determined that a distance between the current location of the navigation apparatus 100 and the second flag point is less than a third threshold, send, to the player 170, voice broadcast information used to execute voice broadcast, so that the player 170 performs voice broadcast according to the voice broadcast information.

Specifically, when the coprocessor 120 detects that a distance between the current location of the navigation apparatus 100 and the location of the second flag point is less than or equal to the third threshold, that is, the current location of the navigation apparatus 100 falls within a fencing range using the second flag point as a center and the third threshold as a radius, the coprocessor 120 considers that the navigation apparatus 100 is about to arrive at the second flag point and that voice broadcast needs to be performed, The coprocessor 120 may send the second trigger message to the main processor 110, where the second trigger message is used to wake up the main processor 110 to perform voice broadcast. The main processor 110 generates the voice broadcast information according to the second trigger message, and sends the voice broadcast information to the player 170. The player 170 performs broadcast according to the voice information. Generating the voice broadcast information by the main processor 110 may be that the coprocessor 120 obtains, from the first memory 140, voice broadcast information related to the second flag point, or the second trigger message may carry the voice broadcast information. This is not limited in this embodiment of the present invention. When the coprocessor 120 detects that a distance between the current location of the navigation apparatus 100 and a location of a flag point is greater than the third threshold, that is, the current location of the navigation apparatus 100 falls beyond a fencing range using the flag point as a center and the third threshold as a radius, the coprocessor 120 considers that the navigation apparatus 100 is far away from the flag point and that voice broadcast does not need to be performed. The third threshold may be the same as or different from the first threshold or the second threshold, and the first threshold is the same as or different from the second threshold. This is not limited in this embodiment of the present invention.

It should be understood that the multiple first flag points may include the second flag point or may not include the second flag point. In this embodiment of the present invention, the multiple first flag points are used to determine whether the main processor 110 needs to replan a path, and the second flag point is used to determine whether voice broadcast needs to be performed. The flag points herein are divided according to a navigation event.

It should be understood that the navigation apparatus 100 may be an independent navigation apparatus 100 or may be a navigation apparatus 100 included in a terminal device. If the current location of the navigation apparatus 100 is determined, it may be considered that the navigation apparatus 100 is independent of the terminal device. If the terminal device includes the navigation apparatus 100, the locator 130 may determine a current location of the terminal device. This is not limited in this embodiment of the present invention.

In a preferred embodiment, when a user proactively starts the terminal device, the terminal device is in a screen-on state. When the main processor 110 receives the first trigger message sent by the coprocessor 120 and replans a path for the terminal device according to the first trigger message, the terminal device is in the screen-on state. When a screen of the terminal device is on, the main processor 110 may receive the second trigger message sent by the coprocessor 120 and perform voice broadcast according to the second trigger message. Although the main processor 110 already has relatively high power consumption when performing path planning during screen-on of the terminal device, the main processor 110 may perform voice broadcast when voice broadcast needs to be performed. In this way, the main processor 110 may perform path planning and voice broadcast simultaneously. When the main processor 110 performs path planning, the terminal device is in the screen-on state, and the terminal device in the screen-on state has relatively high power consumption. In this case, if voice broadcast further needs to be performed, the coprocessor 120 may wake up the main processor 110 to trigger voice broadcast. Power consumption of the main processor 110 when performing path planning and triggering voice broadcast simultaneously is less than power consumption of the main processor 110 when performing path planning once independently and performing voice broadcast once independently. In this way, power consumption can be reduced to some extent.

In an optional embodiment, as shown in FIG. 1, the navigation apparatus 100 may further include a second memory 150, or may include a direct memory access (Direct Memory Access, "DMA" for short) device. The DMA is configured to: obtain the navigation data from the first memory 140, and store the navigation data in the second memory 150. The coprocessor 120 is further configured to obtain the navigation data from the second memory 150.

In an optional embodiment, the navigation data in the first memory 140 may be transmitted to the second memory 150 by using a bus. The first memory 140 may be a double data rate (Double Data Rate, "DDR" for short) synchronous dynamic random access memory. The second memory 150 may be a static random access memory (Static RAM, "SRAM" for short). The main processor 110 may store the navigation data in the first memory 140, and transmit, before the main processor 110 sleeps, the data in the first memory 140 to the second memory 150 by using the bus. Alternatively, the DMA obtains the navigation data from the first memory 140, and stores the navigation data in the second memory 150. Generally, power consumption of the first memory 140 may be higher than power consumption of the second memory 150. When performing determining or voice broadcast, the coprocessor 120 obtains the navigation data from the second memory 150. In this way, power consumption of the entire navigation process can be further reduced.

In an optional embodiment, as shown in FIG. 1, the navigation apparatus 100 further includes a display 160. The coprocessor 120 is further specifically configured to: determine the data that needs to be displayed in the navigation data, and send, to the display 160, the data that needs to be displayed. The display 160 is configured to: receive the data that is sent by the coprocessor 120 and that needs to be displayed, and generate and display a navigation image according to the data that needs to be displayed.

Optionally, the apparatus 100 may further include a drive, configured to drive the display to display the navigation image.

Optionally, the navigation data may further include information such as a geographical attribute, latitude and longitude, a coordinate location of a flag point, or may include map layer information, information about a place of departure and a destination, and the like, or may include some intermediate data generated by the main processor 110 or the coprocessor 120 in a process of executing an algorithm or running a program. This is not limited in this embodiment of the present invention.

For example, the map layer information may be related information used by the display 160 to display an entire map in use. Before being processed by the main processor 110, the map layer information is data information; and after being processed by the main processor 110, the map layer information becomes layer data information for displaying by the display 160. Flag points may be a series of coordinate points in a navigation path. A flag point may be a house, a shop, a post-box, a bus stop, a speed-limit photographing point, or the like. Each flag point may also include a name, a type, longitude, and latitude of the location. The navigation data may further include information about a place of departure and a destination of a user. The navigation data in this embodiment of the present invention may be all navigation-related data. This is not limited in this embodiment of the present invention.

It should be understood that the distance mentioned in all embodiments of the present invention may be a distance in two-dimensional coordinates plane, or may be a space distance in three-dimensional coordinates. This is not limited in this embodiment of the present invention.

It should also be understood that the sleep state of the main processor 110 may also be referred to as a hibernation state or a low power-consumption state, and the main processor is not powered off completely. However, at least one of an operating voltage or a clock rate of the main processor 110 is lower than a value of that of the main processor 110 when operating normally to execute a program. Therefore, the power consumption of the main processor 110 can be reduced.

Therefore, after the main processor 110 generates the navigation data, the main processor 110 enters the sleep state. The coprocessor 120 determines, according to the navigation data and the current location of the navigation apparatus 100, whether to wake up the main processor 110. The power consumption of the main processor 110 is higher than the power consumption of the coprocessor 120. When the main processor 110 needs to be involved, the coprocessor 120 wakes up the main processor 110. When the main processor 110 does not need to be involved, the main processor 110 enters the sleep state. Therefore, the power consumption of the navigation apparatus 100 can be reduced, and the battery life of the navigation apparatus 100 can be improved.

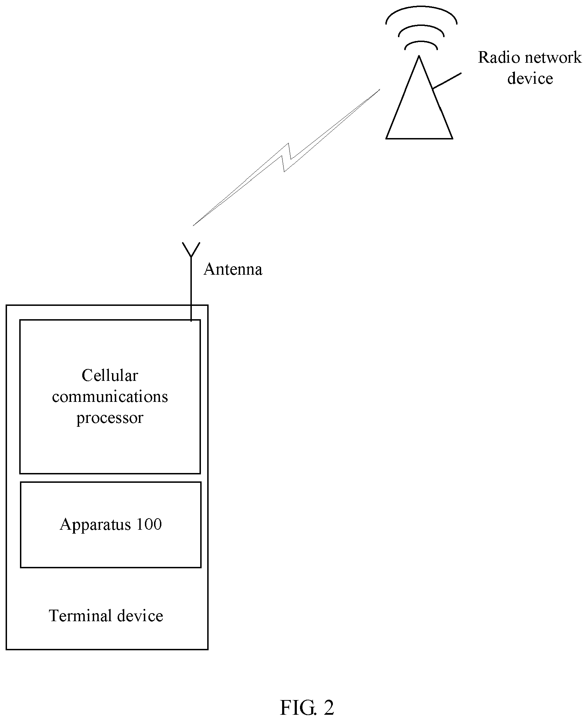

FIG. 2 shows a schematic diagram of an application scenario example according to an embodiment of the present invention. A terminal device includes a navigation apparatus 100, a cellular communications processor, and an antenna. The navigation apparatus 100 is configured to perform navigation. The cellular communications processor is configured to communicate with a radio network device by using the antenna. The radio network device may be a base station or a base station controller and is configured to provide a cellular radio communication service for the terminal device. The terminal device may be a mobile phone, a tablet computer, or the like. This is not limited in this embodiment of the present invention.

Therefore, the navigation apparatus 100 in the terminal device uses a fence to determine, according to navigation data and a current location of the terminal device, whether path replanning or voice broadcast needs to be performed. After a main processor 110 generates navigation data, the main processor 110 is in a sleep state. Power consumption of the main processor 110 is higher than power consumption of a coprocessor 120. When the main processor 110 needs to be involved, the coprocessor 120 wakes up the main processor 110. When the main processor 110 does not need to be involved, the main processor 110 is in the sleep state. Therefore, power consumption of the navigation apparatus 100 can be reduced, standby time of the terminal device can be further increased, and inconvenience caused in a process of frequently charging the terminal device by using a charging cable can be reduced.

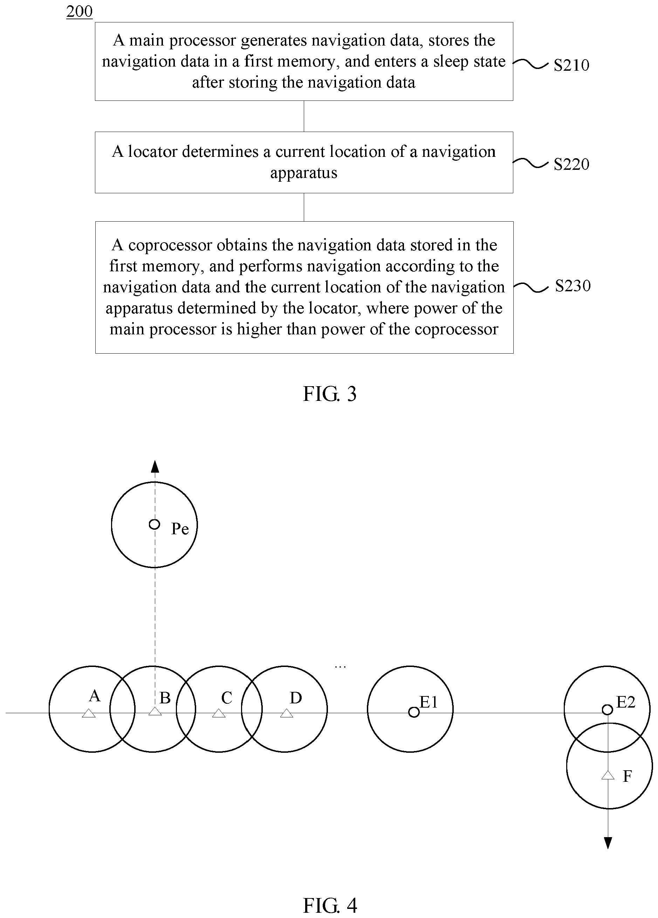

FIG. 3 shows a schematic diagram of a navigation method 200 according to an embodiment of the present invention. The navigation method 200 includes the following steps:
S210. A main processor 110 generates navigation data, stores the navigation data in a first memory 140, and enters a sleep state after storing the navigation data.
S220. A locator 130 determines a current location of the navigation apparatus 100.
S230. A coprocessor 120 obtains the navigation data stored in the first memory 140, and performs navigation according to the navigation data and the current location of the navigation apparatus 100 determined by the locator 130, where the performing navigation includes at least one of triggering the main processor 110 to update the navigation data, triggering voice broadcast, or determining data that needs to be displayed in the navigation data.

Power of the main processor 110 is higher than power of the coprocessor 120, and there is no strict sequence between S220 and S210.

In an optional embodiment, the performing, by a coprocessor 120, navigation according to the navigation data and the current location of the navigation apparatus 100 determined by the locator 130 includes: determining, by the coprocessor 120 according to the navigation data and the current location of the navigation apparatus 100 determined by the locator 130, that the main processor 110 needs to be woken up.

In an optional embodiment, the navigation data includes location data of multiple first flag points, and the multiple first flag points are distributed in a current planning path at intervals. The determining, by the coprocessor 120 according to the navigation data and the current location of the navigation apparatus 100 determined by the locator 130, that the main processor 110 needs to be woken up includes: when a distance between the current location of the navigation apparatus 100 and each of the multiple first flag points is greater than a first threshold or it is determined that a distance between the current location of the navigation apparatus 100 and a first flag point with a shortest distance to the current location is greater than the first threshold, determining that the main processor 110 needs to be woken up to update the navigation data.

In an optional embodiment, the performing, by a coprocessor 120, navigation according to the navigation data and the current location of the navigation apparatus 100 determined by the locator 130 further includes: after determining that the main processor 110 needs to be woken up to update the navigation data, sending, by the coprocessor 120, a first trigger message to the main processor 110, where the first trigger message is used to request the main processor 110 to replan a travel path; receiving, by the main processor 110, the first trigger message sent by the coprocessor 120; and switching, by the main processor 110, from the sleep state to an operation state and generating updated navigation data according to the first trigger message.

In an optional embodiment, the navigation data includes location data of a second flag point for triggering voice broadcast. The determining, by the coprocessor 120 according to the navigation data and the current location of the navigation apparatus 100 determined by the locator 130, that the main processor 110 needs to be woken up includes: when it is determined that a distance between the current location of the navigation apparatus 100 and the second flag point is less than a second threshold, determining, by the coprocessor 120, that the main processor 110 needs to be woken up to trigger voice broadcast.

In an optional embodiment, the performing, by a coprocessor 120, navigation according to the navigation data and the current location of the navigation apparatus 100 determined by the locator 130 further includes: after determining that the main processor 110 needs to be woken up to trigger voice broadcast, sending, by the coprocessor 120, a second trigger message to the main processor 110, where the second trigger message is used to instruct the main processor 110 to trigger voice broadcast, and the second trigger message may further carry information about the second flag point; receiving, by the main processor 110, the second trigger message sent by the coprocessor; and sending, by the main processor 110, voice broadcast information used to execute voice broadcast to a player 170 according to the second trigger message, so that the player 170 performs voice broadcast according to the voice broadcast information.

In an optional embodiment, the navigation data includes location data of a second flag point for triggering voice broadcast. When it is determined that a distance between the current location of the navigation apparatus 100 and the second flag point is less than a third threshold, the coprocessor 120 sends, to a player 170, voice broadcast information used to execute voice broadcast, so that the player 170 performs voice broadcast according to the voice broadcast information.

In an optional embodiment, the second flag point includes at least one of a path turn point, a service area, or a landmark building in the current planning path.

In an optional embodiment, the obtaining, by a coprocessor 120, the navigation data stored in the first memory 140 includes: obtaining, by a DMA, the navigation data from the first memory 140, and storing the navigation data in the second memory 150; and obtaining, by the coprocessor 120, the navigation data from the second memory 150.

In an optional embodiment, the performing, by a coprocessor 120, navigation according to the navigation data and the current location of the navigation apparatus 100 determined by the locator 130 further includes: determining, by the coprocessor 120 in the navigation data, the data that needs to be displayed, and sending, to a display 160, the data that needs to be displayed; and receiving, by the display, the data that is sent by the coprocessor 120 and that needs to be displayed, and generating the navigation image according to the data that needs to be displayed.

In an example, the main processor 110 plans a path and generates a series of flag points. As shown in FIG. 4, in the flag points, E2 is defined as a second flag point, such as a turning or a U-turn, and voice broadcast needs to be performed near a location of E2. E1 is a point in proximity to the second flag point E2 in the path. A, B, C, D, ..., and F in FIG. 4 are first flag points. A is a place of departure, and F is a destination. A corresponding geofencing radius (for example, 20 m) is set, to form a corresponding sequence: A→B→C→D→...→E1→E2→F. The geofencing radius may be a preset distance threshold of the second flag point, and is usually an area formed by using the second flag point as a center and the first threshold (for example, 20 m) as a radius. The area is used to determine whether a user using the navigation apparatus 100 is located at the second flag point, so as to trigger a subsequent operation. For example, if a geometric distance between coordinates of the user and coordinates of the second flag point is less than or equal to the fencing radius, that is, falling within the area, the user is considered to be located in an original planning path. If a geometric distance between coordinates of the user and coordinates of the second flag point is greater than the fencing radius, that is, a current location of the user falls beyond the area, the user is considered to deviate from a planned travel path, and a travel path needs to be replanned. Each second flag point may be corresponding to a same or a different threshold. Alternatively, the geofencing radius may be a preset distance threshold of the second flag point, and is usually an area formed by using the second flag point as a center and the second threshold (for example, 500 m) as a radius. The area is used to determine whether a user is located at the second flag point, so as to trigger voice broadcast. For example, if a geometric distance between coordinates of the user and coordinates of the second flag point is greater than the fencing radius, the user is considered still not to arrive at the second flag point, and voice broadcast does not need to be performed. If a geometric distance between coordinates of the user and coordinates of the second flag point is less than or equal to the fencing radius, that is, the user is about to arrive at the second flag point, voice broadcast needs to be performed. Each second flag point may be corresponding to a same or a different threshold.

The first flag point is used to determine whether the user falls within a fence. The determining may be performed by the main processor 110 or the coprocessor 120. When the main processor 110 determines that the user falls beyond the fence, the main processor 110 replans a path. Alternatively, when the coprocessor 120 determines that the user falls beyond the fence, the coprocessor 120 sends a trigger message to the main processor 110, and the main processor 110 replans a path according to the trigger message. The second flag point is used to determine whether the user is about to arrive at the fence. The determining may be performed by the main processor 110 or the coprocessor 120. When the main processor 110 determines that the user arrives at the fence, the main processor 110 triggers voice broadcast. When the coprocessor 120 determines that the user arrives at the fence, the coprocessor 120 triggers voice broadcast, or the coprocessor 120 may send a trigger message to the main processor 110, and the main processor 110 triggers voice broadcast.

In an optional embodiment, after storing the foregoing flag point information (including coordinates, geographical attributes of the flag points, and the like) in the first memory 140, the main processor 110 enters the sleep state.

A process in which the coprocessor 120 determines whether path replanning needs to be performed and the main processor 110 replans a path is as follows:
Step 1: The coprocessor 120 reads a flag point stored in the first memory 140.
Step 2: As shown in FIG. 4, after the coprocessor 120 determines, according to the fencing radius, that an event A→B occurs, if B→Pe occurs next, where a distance between the point Pe and all flag points in a navigation path is greater than the specified fencing radius, that is, a distance between the Pe and the nearest flag point B is also greater than the specified fencing radius, the coprocessor 120 determines that the user deviates from the original planning path.
Step 3: The coprocessor 120 sends a trigger message to the main processor 110 to wake up the main processor 110.
Step 4: The main processor 110 replans a path.

A process in which the coprocessor 120 determines whether voice broadcast needs to be performed and the main processor 110 triggers voice broadcast is as follows:
Step 1: The coprocessor 120 reads the flag point information stored in the first memory 140.
Step 2: As shown in FIG. 4, when the coprocessor 120 determines that a distance between current coordinates of the user and coordinates of E2 is less than a preset threshold (the fencing radius), the coprocessor 120 determines that the user is about to arrive at the flag point.
Step 3: The coprocessor 120 sends a trigger message to the main processor 110 to wake up the main processor 110.
Step 4: The main processor 110 reads, from the first memory 140, voice broadcast information of the flag point.
Step 5: The main processor 110 triggers voice broadcast (for example, voice broadcast "Go straight 600 meters ahead to turn right").

A process in which the coprocessor 120 determines whether voice broadcast needs to be performed and the coprocessor 120 triggers voice broadcast is as follows:
Step 1: The coprocessor 120 reads the flag point information stored in the first memory 140.
Step 2: As shown in FIG. 4, when the coprocessor 120 determines that a distance between current coordinates of the user and coordinates of E2 is less than a preset threshold (the fencing radius), the coprocessor 120 determines that the user is about to arrive at the flag point.
Step 3: The coprocessor 120 reads, from the first memory 140, voice broadcast information of the flag point.
Step 4: The coprocessor 120 triggers voice broadcast (for example, voice broadcast "Go straight 600 meters ahead to turn right").

In an optional embodiment, the foregoing flag points and flag point information (including coordinates, geographical attributes of the flag points, and the like) are stored in the first memory 140.

A process in which the main processor 110 determines whether path replanning needs to be performed and the main processor 110 replans a path is as follows:
Step 1: The main processor 110 reads the flag point information stored in the first memory 140.
Step 2: As shown in FIG. 4, after the main processor 110 determines, according to the fencing radius, that an event A→B occurs, if B→Pe occurs next, where a distance between the point Pe and the flag point B or between the point Pe and all flag points in a navigation path is greater than the specified fencing radius, the main processor 110 determines that the user deviates from the original planning path.
Step 3: The main processor 110 replans a path.

A process in which the main processor 110 determines whether voice broadcast needs to be performed and the main processor 110 triggers voice broadcast is as follows:
Step 1: The main processor 110 reads the flag point information stored in the first memory 140.
Step 2: As shown in FIG. 4, when the main processor 110 determines that a distance between current coordinates of the user and coordinates of E2 is less than a preset threshold (the fencing radius), the main processor 110 determines that the user is about to arrive at the flag point.
Step 3: The main processor 110 reads, from the first memory 140, voice broadcast information of the flag point.
Step 4: The main processor 110 triggers voice broadcast (for example, voice broadcast "Go straight 600 meters ahead to turn right").

It should be understood that, for the determining whether the flag point falls within the fence, in addition to the fencing radius used for determining, a current speed or acceleration of the user may also be used for determining. This is not limited in this embodiment of the present invention.

It should also be understood that the foregoing obtained flag point information is read by the main processor 110 or the coprocessor 120 from the first memory 140. Alternatively, the coprocessor 120 may read the foregoing flag point information from the second memory 150. This is not limited in this embodiment of the present invention.

Therefore, according to the navigation method provided in this embodiment of the present invention, a fence is used to determine, according to the navigation data and the current location of the navigation apparatus 100, whether path replanning or voice broadcast needs to be performed. After the main processor 110 generates the navigation data, the main processor 110 enters the sleep state. Power consumption of the main processor 110 is higher than power consumption of the coprocessor 120. When the main processor 110 needs to be involved, the coprocessor 120 wakes up the main processor 110. When the main processor 110 does not need to be involved, the main processor 110 enters the sleep state. Therefore, power consumption of the navigation apparatus 100 can be reduced, and a battery life of the navigation apparatus 100 can be improved.

It should be understood that, sequence numbers of the foregoing processes do not mean execution sequences. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, apparatuses and method steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing apparatus, reference may be made to a corresponding process in the method embodiments, and details are not described herein again.

In the several embodiments provided in the present application, it should be understood that the disclosed apparatus and method may be implemented in other manners. For example, the described apparatus embodiment is merely an example. For example, the apparatus division is merely logical function division and may be other division in actual implementation. For example, a plurality of apparatuses or components may be combined or integrated into another system, or some features may be ignored or not performed. In addition, the displayed or discussed mutual couplings or direct couplings or communication connections may be implemented by using some interfaces. The indirect couplings or communication connections between the apparatuses may be implemented in electronic, mechanical, or other forms.

The apparatuses described as separate parts may or may not be physically separate, and parts displayed as apparatuses may or may not be physical apparatuses, may be located in one position, or may be distributed on a plurality of network units. Some or all of the apparatuses may be selected according to actual requirements to achieve the objectives of the solutions of the embodiments.

In addition, functional apparatuses in the embodiments of the present invention may be integrated into one processing apparatus, or each of the apparatuses may exist alone physically, or two or more apparatuses may be integrated into one apparatus.

When being implemented in a form of a software functional apparatus and sold or used as an independent product, the functions may be stored in a computer readable storage medium for reading and running by either the main processor 110 or the coprocessor 120. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A navigation apparatus, wherein the navigation apparatus comprises a main processor, a coprocessor, a locator, and a first memory;
the main processor is configured to: generate navigation data, store the navigation data in the first memory, and enter a sleep state after storing the navigation data;
the locator is configured to determine a current location of the navigation apparatus; and
the coprocessor is configured to: obtain the navigation data stored in the first memory, and perform navigation according to the navigation data and the current location of the navigation apparatus determined by the locator, wherein the performing navigation comprises at least one of triggering the main processor to update the navigation data, triggering voice broadcast, or determining data that needs to be displayed in the navigation data, and
power of the main processor is higher than power of the coprocessor.

2. The navigation apparatus according to claim 1, wherein the coprocessor is specifically configured to determine, according to the navigation data and the current location of the navigation apparatus determined by the locator, that the main processor needs to be woken up.

3. The navigation apparatus according to claim 2, wherein the navigation data comprises location data of multiple first flag points, and the multiple first flag points are distributed in a current planning path at intervals; and
the coprocessor is further specifically configured to: when it is determined that a distance between the current location of the navigation apparatus and each of the multiple first flag points is greater than a first threshold or it is determined that a distance between the current location of the navigation apparatus and a first flag point with a shortest distance to the current location is greater than the first threshold, determine that the main processor needs to be woken up to update the navigation data.

4. The navigation apparatus according to claim 3, wherein the coprocessor is further specifically configured to: after determining that the main processor needs to be woken up to update the navigation data, send a first trigger message to the main processor, wherein the first trigger message is used to request the main processor to replan a travel path; and
the main processor is further configured to:
receive the first trigger message sent by the coprocessor; and
switch from the sleep state to an operation state and generate updated navigation data according to the first trigger message.

5. The navigation apparatus according to any one of claims 2 to 4, wherein the navigation data comprises location data of a second flag point for triggering voice broadcast; and
the coprocessor is further specifically configured to: when it is determined that a distance between the current location of the navigation apparatus and the second flag point is less than a second threshold, determine that the main processor needs to be woken up to trigger voice broadcast.

6. The navigation apparatus according to claim 5, wherein the coprocessor is further specifically configured to: after determining that the main processor needs to be woken up to trigger voice broadcast, send a second trigger message to the main processor, wherein the second trigger message is used to instruct the main processor to trigger voice broadcast; and
the main processor is further configured to:
receive the second trigger message sent by the coprocessor; and
send voice broadcast information used to execute voice broadcast to a player according to the second trigger message.

7. The navigation apparatus according to any one of claims 1 to 4, wherein the navigation data comprises location data of a second flag point for triggering voice broadcast; and
the coprocessor is further specifically configured to: when it is determined that a distance between the current location of the navigation apparatus and the second flag point is less than a third threshold, send voice broadcast information used to execute voice broadcast to a player.

8. The navigation apparatus according to any one of claims 1 to 7, wherein the navigation apparatus further comprises a second memory and a direct memory access device;
the direct memory access device is configured to: obtain the navigation data from the first memory, and store the navigation data in the second memory; and
the coprocessor is further specifically configured to obtain the navigation data from the second memory.

9. The navigation apparatus according to any one of claims 1 to 8, wherein the navigation apparatus further comprises a display;
the coprocessor is further specifically configured to: determine the data that needs to be displayed in the navigation data, and send the data that needs to be displayed to the display; and
the display is configured to: receive the data that is sent by the coprocessor and that needs to be displayed, and generate and display a navigation image according to the data that needs to be displayed.

10. A navigation method, wherein the navigation method comprises:
generating, by a main processor, navigation data, storing the navigation data in a first memory, and entering a sleep state after storing the navigation data;
determining, by a locator, a current location of a navigation apparatus; and
obtaining, by a coprocessor, the navigation data stored in the first memory, and performing navigation according to the navigation data and the current location of the navigation apparatus determined by the locator, wherein the performing navigation comprises at least one of triggering the main processor to update the navigation data, triggering voice broadcast, or determining data that needs to be displayed in the navigation data, and
power of the main processor is higher than power of the coprocessor.

11. The navigation method according to claim 10, wherein the performing, by a coprocessor, navigation according to the navigation data and the current location of the navigation apparatus determined by the locator comprises:
determining, by the coprocessor according to the navigation data and the current location of the navigation apparatus determined by the locator, that the main processor needs to be woken up.

12. The navigation method according to claim 11, wherein the determining, by the coprocessor according to the navigation data and the current location of the navigation apparatus determined by the locator, that the main processor needs to be woken up comprises:
when it is determined that a distance between the current location of the navigation apparatus and each of multiple first flag points is greater than a first threshold or it is determined that a distance between the current location of the navigation apparatus and a first flag point with a shortest distance to the current location is greater than the first threshold, determining that the main processor needs to be woken up to update the navigation data; and
the navigation data comprises location data of the multiple first flag points, and the multiple first flag points are distributed in a current planning path at intervals.

13. The navigation method according to claim 12, wherein the performing, by a coprocessor, navigation according to the navigation data and the current location of the navigation apparatus determined by the locator further comprises:
after determining that the main processor needs to be woken up to update the navigation data, sending, by the coprocessor, a first trigger message to the main processor, wherein the first trigger message is used to request the main processor to replan a travel path;
receiving, by the main processor, the first trigger message sent by the coprocessor; and
switching, by the main processor, from the sleep state to an operation state and generating updated navigation data according to the first trigger message.

14. The navigation method according to any one of claims 11 to 13, wherein the determining, by the coprocessor according to the navigation data and the current location of the navigation apparatus determined by the locator, that the main processor needs to be woken up comprises:
when it is determined that a distance between the current location of the navigation apparatus and a second flag point is less than a second threshold, determining, by the coprocessor, that the main processor needs to be woken up to trigger voice broadcast; and
the navigation data comprises location data of the second flag point for triggering voice broadcast.

15. The navigation method according to claim 14, wherein the performing, by a coprocessor, navigation according to the navigation data and the current location of the navigation apparatus determined by the locator further comprises:
after determining that the main processor needs to be woken up to trigger voice broadcast, sending, by the coprocessor, a second trigger message to the main processor, wherein the second trigger message is used to instruct the main processor to trigger voice broadcast;
receiving, by the main processor, the second trigger message sent by the coprocessor; and
sending, by the main processor, voice broadcast information used to execute voice broadcast to a player according to the second trigger message.

16. The navigation method according to any one of claims 10 to 13, wherein the performing, by a coprocessor, navigation according to the navigation data and the current location of the navigation apparatus determined by the locator further comprises:
when it is determined that a distance between the current location of the navigation apparatus and a second flag point is less than a third threshold, sending, by the coprocessor to a player, voice broadcast information used to execute voice broadcast; and
the navigation data comprises location data of the second flag point for triggering voice broadcast.

17. The navigation method according to any one of claims 10 to 16, wherein the obtaining, by a coprocessor, the navigation data stored in the first memory comprises:
obtaining, by a direct memory access device, the navigation data from the first memory, and storing the navigation data in the second memory; and
obtaining, by the coprocessor, the navigation data from the second memory.

18. The navigation method according to any one of claims 10 to 17, wherein the performing, by a coprocessor, navigation according to the navigation data and the current location of the navigation apparatus determined by the locator further comprises:
determining, by the coprocessor in the navigation data, the data that needs to be displayed, and sending the data that needs to be displayed to a display; and
receiving, by the display, the data that is sent by the coprocessor and that needs to be displayed, and generating the navigation image according to the data that needs to be displayed.
